# EUROPÄISCHE PATENTANMELDUNG

(11) **EP 0 780 744 A1**
(43) Veröffentlichungstag der Anmeldung: **25.06.1997**
(21) Anmeldenummer: 96119822.3
(22) Anmeldetag: 10.12.1996
(51) Int. Cl.: G05B 19/12

(54) **Programmauswahlsystem für Bearbeitungsmaschinen**

(30) Priorität: 20.12.1995 DE 19547736
(71) Anmelder: Engel, Harald, A-2380 Perchtoldsdorf (AT)
(72) Erfinder: Engel, Harald, A-2380 Perchtoldsdorf (AT)
(74) Vertreter: TER MEER STEINMEISTER & PARTNER GbR

(57) **Zusammenfassung**

Ein Programmauswahlsystem für Bearbeitungsmaschinen ermöglicht das automatische Erfassen von Oberflächeneigenschaften einer zu bearbeitenden Ware (2) mit Hilfe von einem oder mehreren Sensoren (3, 4; 9). Der erfaßte Meßwert wird in einer Zentraleinheit (5) in einen Meßcode umgesetzt, der mit in einem Speicher (6) gespeicherten Codes verglichen wird. Der gespeicherte Code mit der geringsten Abweichung und das zugehörige Arbeitsprogramm werden aus dem Speicher (6) ausgelesen und einer Maschinensteuereinheit (7) zugeführt. Die Maschine kann sich somit durch Erkennen der zu bearbeitenden Ware automatisch selbst programmieren. Besonders vorteilhaft kann das System bei Bügelmaschinen angewendet werden.

## Beschreibung

Die Erfindung betrifft ein Programmauswahlsystem für Bearbeitungsmaschinen, wie zum Beispiel Textilmaschinen.

Bei Be- oder Verarbeitungsmaschinen im textilen Bereich, aber auch in anderen verarbeitenden Industrien, müssen die Arbeitsprogramme der Maschinen häufig entsprechend der Material- oder Oberflächeneigenschaften der zu bearbeitenden Waren angepaßt werden. Beispielsweise müssen im textilen Bereich Bügelmaschinen je nach zu bügelnder Ware bezüglich der Bügeltemperatur, des Pressdrucks, der Dampfmenge und des Dampfdrucks programmiert werden. Diese Programmierung erfordert in der Regel einige Fachkenntnis, zumindest aber entsprechende Anweisungen, welche Parameter bei welchen Materialien einzustellen sind. Gerade in der verarbeitenden Industrie allerdings wird - insbesondere in Entwicklungsländern - aus Kostengründen vielfach schlecht ausgebildetes Personal mit der Bedienung der Verarbeitungsmaschinen betraut. Dadurch kommt es häufig zu Fehlbedienungen oder -programmierungen der Maschinen, wodurch die Ausschußrate und damit die Produktionskosten teilweise beträchtlich erhöht werden.

Der Erfindung liegt die Aufgabe zugrunde, ein Programmauswahlsystem für Bearbeitungsmaschinen anzugeben, durch das eine Fehlprogrammierung der Bearbeitungsmaschine verhindert werden kann.

Die Lösung der gestellten Aufgabe wird in Anspruch 1 angegeben. Ein entsprechendes Arbeitsverfahren für das Programmauswahlsystem nach Anspruch 1 wird in Anspruch 14 angegeben. Vorteilhafte Ausgestaltungen der Erfindung sind den Unteransprüchen zu entnehmen.

Erfindungsgemäß wird ein Programmauswahlsystem für Bearbeitungsmaschinen angegeben, mit
- einer Zentraleinheit;
- mindestens einem mit der Zentraleinheit verbundenen Sensor, der mindestens eine Oberflächeneigenschaft einer zu bearbeitenden Ware erfaßt und in einen Meßwert umsetzt, wobei der Meßwert der Zentraleinheit zugeführt und dort in einen Meßcode umgesetzt wird;
- einem mit der Zentraleinheit verbundenen Speicher mit gespeicherten Codes und zugehörigen Arbeitsprogrammen für bekannte Waren; und mit
- einer mit der Zentraleinheit verbundenen Maschinensteuereinheit für die Bearbeitungmaschine;
- wobei die Zentraleinheit den Meßcode mit den gespeicherten Codes vergleicht und das zu dem gespeicherten Code mit der geringsten Abweichung gehörende Arbeitsprogramm aus dem Speicher ausliest und der Maschinensteuereinheit zuführt.

Ein derartiges Programmauswahlsystem erfaßt mittels eines oder mehrerer Sensoren wenigstens eine Oberflächeneigenschaft (z.B. Struktur, Rauhigkeit, Textur, Profil, Gewebe, Farbe, Helligkeit, Reflexionsverhalten) der zu bearbeitenden Ware, Diese kann zum Beispiel durch den Bediener vor den Sensor gehalten werden oder aber auch vorteilhafterweise sich bereits in Arbeitsstellung befinden. Im Falle einer Bügelmaschine würde die Ware beispielsweise schon auf der Unterplatte aufliegen, bevor ihre Oberflächeneigenschaften durch die Sensoren erfaßt würden.

Der oder die von den Sensoren erfaßten Meßwerte werden in der Zentraleinheit in einen Meßcode umgewandelt, welcher mit den im Speicher gespeicherten Codes verglichen wird. In der Regel wird im Speicher ein Code gefunden, der dem gemessenen Code weitgehend entspricht, so daß das zu dem gespeicherten Code gehörende und mit diesem im Speicher verbundene Arbeitsprogramm aus dem Speicher ausgelesen und an die Maschinensteuereinheit weitergegeben wird. Diese wird dadurch automatisch programmiert, so daß anschließend der Bearbeitungsvorgang, beispielsweise der Bügelvorgang erfolgen kann.

Vorteilhafterweise können als Sensoren ein Ultraschallsensor mit einem Ultraschallsender und einem Ultraschallempfänger, ein Infrarotsensor mit einem Infrarotsender und einem Infrarotempfänger oder ein Farbsensor mit einer Lichtquelle und einem Lichtempfänger sein. Der Ultraschallsensor eignet sich zur Erfassung der Oberflächenstruktur aufgrund des unterschiedlichen Schallreflexionsverhaltens der Ware bei unterschiedlich strukturierter Oberfläche. Der Infrarotsensor und der Farbsensor können Farb- oder Helligkeitswerte der zu bestimmenden Ware erfassen.

Besonders vorteilhaft ist es, wenn der Sensor einen Laser zum Abtasten des Oberflächenprofils der Ware und einen Lichtempfänger zum Empfangen des von der Ware reflektierten Lichts aufweist. Mit Hilfe des Lasers ist es möglich, die Oberflächenstruktur der Ware bis in den µm-Bereich zu erfassen.

Vorteilhafterweise sind mindestens zwei Sensoren mit unterschiedlichen Wirkprinzipien vorgesehen, so daß wenigstens zwei Oberflächen- oder Materialeigenschaften der Ware erfaßt werden.

Eine Kombination von einem Ultraschallsensor und einem Infrarotsensor hat sich als sehr vorteilhaft erwiesen, wobei es besonders zweckmäßig ist, daß jeder Sensor eine eigene Oberflächeneigenschaft erfaßt und daraus jeweils ein eigener Code gebildet wird.

Besonders vorteilhaft ist es, daß der Sensor parallel über die Ware geführt wird. Auf diese Weise können Einflüsse durch variable Abstände zwischen dem Sensor und der Ware vermieden werden. Zu diesem Zweck ist es zweckmäßig, wenn der Meßabstand des Sensors zur Ware mittels einer Abstandsregelung konstant einstellbar ist.

Vorteilhafterweise sind die Daten des Speichers ausladbar. Dadurch können die Daten auch zu anderen Bearbeitungsmaschinen übertragen oder extern gesichert werden.

Besonders vorteilhaft ist es, wenn die Zentraleinheit und der Speicher in der Maschinensteuereinheit integriert sind. Dadurch läßt sich die gesamte Einheit kompakt ausführen und der Bediener muß nicht mehrere Geräte parallel bedienen.

Bei einer bevorzugten Ausführungsform ist die Bearbeitungsmaschine eine Bügelmaschine.

Ein Verfahren für ein oben beschriebenes Programmauswahlsystem ist erfindungsgemäß durch die Schritte gekennzeichnet:
- Erfassen mindestens einer Oberflächeneigenschaft einer zu bearbeitenden Ware durch einen Sensor und Ausgeben eines Meßwerts;
- Zuführen des Meßwerts zu einer Zentraleinheit;
- Umsetzen des Meßwerts in einen Meßcode;
- Vergleichen des Meßcodes mit in einem Speicher gespeicherten Codes;
- Auswählen eines zum Meßcodes den geringsten Unterschied aufweisenden gespeicherten Codes und eines mit diesem gekoppelten Arbeitsprogramms; und
- Zuführen des Arbeitsprogramms zu einer Maschinensteuereinheit einer Bearbeitungsmaschine.

Dieses Verfahren ermöglicht mit dem erfindungsgemäßen Programmauswahlsystem eine vollautomatische Programmierung der Bearbeitungsmaschine, wenn diese verschiedene Waren be- oder verarbeiten soll. Nur aufgrund der Oberflächen- bzw. Materialeigenschaften der Ware wird die Maschine programmiert.

Besonders vorteilhaft ist es, wenn das Erfassen der Oberflächeneigenschaften berührungslos erfolgt.

Die Erfindung wird nachfolgend anhand bevorzugter Ausführungsformen unter Zuhilfenahme der Figuren näher erläutert.

Es zeigen:
- **Fig.1**: schematisch ein erfindungsgemäßes Programmauswahlsystem für Bearbeitungsmaschinen; und
- **Fig. 2**: schematisch ein anderes erfindungsgemäßes Programmauswahlsystem.

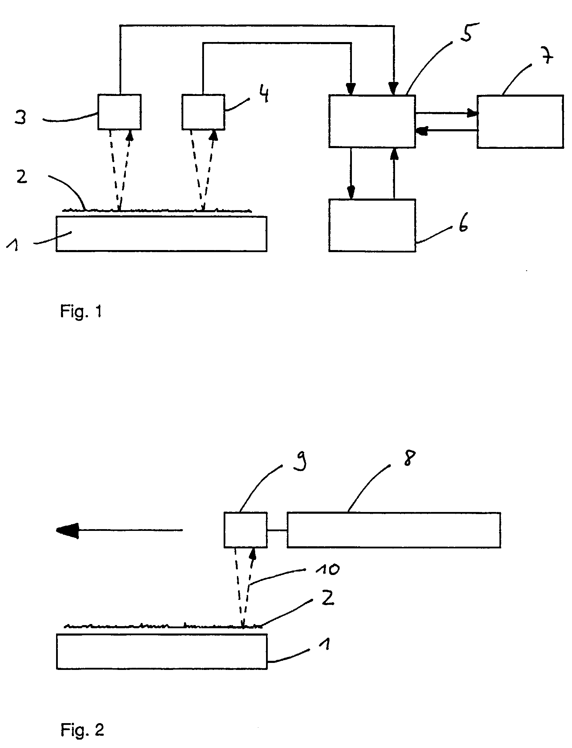

Fig. 1 zeigt am Beispiel einer Bügelmaschine schematisch ein erfindungsgemäßes Programmauswahlsystem für Bearbeitungsmaschinen. Anstelle der Bügelmaschine kann das Programmauswahlsystem selbstverständlich bei vielen anderen Be- oder Verarbeitungsmaschinen im textilen Bereich, beispielsweise bei Zuschnitt- oder Nähautomaten, oder in anderen Industrien, wie der Baustoffindustrie verwendet werden. Entscheidend ist lediglich, daß sich die zu verarbeitenden Waren aufgrund unterschiedlicher Oberflächeneigenschaften unterscheiden lassen.

Wie Figur 1 zeigt, ist auf eine Unterplatte 1 einer Bügelmaschine eine zu bügelnde Ware 2 aufgelegt. Nach Abschluß des Programmiervorgangs wird die Ware 2 zwischen der Unterplatte 1 und einer in Fig. 1 nicht dargestellten Oberplatte gepreßt. Dazu kann die Unterplatte 1 beispielsweise horizontal unter die Oberplatte bewegt werden, bevor sich die Oberplatte absenkt.

Über der Unterplatte 1 und damit über der Ware 2 sind ein Ultraschallsensor 3 und ein Infrarotsensor 4 angeordnet. Jeder der Sensoren 3, 4 besteht aus einem Sender und einem Empfänger, so daß jeder Sensor als ganzes das Reflexionsverhalten der Ware 2 bestimmt.

Der Ultraschallsensor 3 eignet sich insbesondere zum Bestimmen des von der Oberflächenrauhigkeit abhängigen Schallreflexionsverhaltens, das wiederum von der Struktur des Gewebes oder der Textur abhängt.

Der Infrarotsensor 4 kann Helligkeitswerte der Ware 2 ermitteln. Anstelle des Infrarotsensors 4 kann auch ein Farbsensor eingesetzt werden, der ähnlich wie ein aus der Computertechnik bekannter Farbscanner die Farbwerte der zu bügelnden Ware 2 bestimmt.

Die Sensoren 3, 4 sind mit einer Zentraleinheit 5 verbunden, Die von den Sensoren 3, 4 ermittelten Meßwerte werden in Form von Spannungen an die Zentraleinheit abgegeben. Die nachfolgende Tabelle zeigt die Spannungsänderungen der beiden Sensoren 3, 4 für unterschiedliche Stoffe, die in der Bügelmaschine gebügelt werden sollen. Die Meßwerte werden in Volt angegeben.

**Tabelle**

| Ware | Ultraschallsensor (V) | Infrarotsensor (V) |
|---|---|---|
| Popeline dunkel | 0,85 | 0,20 |
| Popeline hell | 0,80 | 0,75 |
| Wolle dunkel | 0,15 | 0,10 |
| Wolle hell | 0,10 | 0,70 |

Aufgrund der beiden Spannungswerte der beiden Sensoren 3, 4 legt die Zentraleinheit 5 einen Meßcode fest. Dieser Meßcode kann einfachheitshalber auch in dem Spannungswert selbst liegen, so daß der Meßcode dem Meßwert entspräche. Im vorliegenden Beispiel würde der Meßcode also aus dem Spannungswert des Ultraschallsensors 3 und dem Spannungswert des Infrarotsensors 4 zusammengesetzt. Anhand des Meßcodes sucht die Zentraleinheit 5 in einem Speicher 6, in dem vorher durch geschultes Personal für jede zu bügelnde Ware entsprechende Codes und zugehörige Arbeitsprogramme eingespeichert wurden, nach einem Code, der von dem gemessenen Code am wenigsten abweicht. Wenn ein derartiger Code im Speicher 6 gefunden wurde, entscheidet die Zentraleinheit 5, daß die auf der Unterplatte 1 aufliegende Ware 2 der im Speicher gespeicherten Ware entspricht. Daraufhin wird aus dem Speicher 6 ein entsprechendes Arbeitsprogramm ausgelesen und von der Zentraleinheit 5 an eine Maschinensteuereinheit 7 abgegeben. In dem Arbeitsprogramm sind alle für die Maschine relevanten Parameter festgelegt, im Falle der Bügelmaschine also die Plattentemperatur, der Pressdruck, der Dampfdruck, die Dampfmenge und die Bügelzeit. Selbstverständlich können noch in beliebiger Anzahl weitere Parameter oder Arbeitsschritte im Speicher 6 gespeichert und an die Maschinensteuereinheit 7 weitergegeben werden.

Anschließend erfolgt der Bügelvorgang in allgemein bekannter Weise auf Grundlage des Arbeitsprogramms.

Der gesamte Meß- und Programmiervorgang dauert etwa 1 Sekunde, so daß der Arbeitsablauf nicht nur nicht unterbrochen wird, sondern im Gegensatz zum konventionellen manuellen Einstellen der Bügelmaschine sogar erheblich beschleunigt wird. Zudem wird von dem Bediener keine weitere Fachkenntnis verlangt, so daß Fehlbedienungen und Ausschuß aufgrund falsch eingestellter Parameter praktisch ausgeschlossen sind.

Bevor neue Waren gebügelt werden können, muß das System diese "kennenlernen". Zu diesem Zweck legt geschultes Fachpersonal die zu erfassende Ware 2 auf die Unterplatte 1 wie üblich auf, läßt sie von den Sensoren ausmessen und gibt über entsprechende, allgemein bekannte Eingabemittel, wie Tastaturen oder Drehschieber, die zu der Ware passenden Arbeitsparameter, d.h. das Arbeitsprogramm, in die Maschinensteuereinheit 7 ein. Die Zentraleinheit 5 verknüpft das eingegebene Arbeitsprogramm zusammen mit den Meßwerten beziehungsweise Meßcodes von den Sensoren 3, 4 und speichert den gesamten Datensatz im Speicher ab. Auf diese Weise lernt die Maschine im Laufe der Zeit immer mehr Materialien kennen und kann diese entsprechend bearbeiten.

Sollte durch die Sensoren ein Meßcode ermittelt werden, zu dem im Speicher 6 kein geeigneter Code gefunden werden kann, gibt die Zentraleinheit 5 oder die Maschinensteuereinheit 7 ein Warnsignal, das den Bediener darauf hinweist, daß eine korrekte Einstellung des Arbeitsprogramms nicht möglich ist.

Die Daten sind aus dem Speicher 6 ausladbar, so daß sie mit Hilfe von Datenträgern oder auch direkt zu den Speichern anderer Maschinen übertragen werden können. Dadurch genügt es in einem Betrieb, eine zu verarbeitende Ware nur einmal zu erfassen und anschließend die Daten an alle Maschinen, die jemals eine derartige Ware verarbeiten werden, zu übertragen. Außerdem können die Daten zur Sicherung auf externen Speichern ausgelagert werden.

Die Ermittlung der Oberflächeneigenschaften durch die Sensoren und insbesondere die Umsetzung der Meßwerte in Meßcodes kann je nach Anforderung unterschiedlich aufwendig ausgeführt werden. Wenn sich die Materialien sehr ähneln, aber dennoch unterschiedliche Arbeitsprogramme erfordern, wird zur Meßcodebestimmung ein größerer Aufwand zu betreiben sein. Zu diesem Zweck eigenen sich bekannte moderne Mustererkennungsverfahren, bei denen aufgrund der durch die Sensoren erkannten Muster komplexe Meßcodes gebildet werden. Im Regelfall unterscheiden sich in der Textilindustrie die zu verarbeitenden Waren ausreichend stark, so daß die hier beschriebenen Sensoreinrichtungen ausreichen.

Bei den Sensoren handelt es sich in der Regel um komplette Sensoreinheiten mit Sendern und Empfängern.

Zur Erhöhung der Meßgenauigkeit ist es notwendig, daß der Meßabstand zwischen den Sensoren 3, 4 und der Ware 2 weitgehend konstant gehalten wird. Zu diesem Zweck ist eine in der Figur 1 nicht dargestellte, allgemein bekannte Abstandsregelung vorgesehen, bei der der Abstand beispielsweise optisch ermittelt und durch hydraulische, pneumatische oder elektrische Elemente falls notwendig korrigiert wird.

Die Sensoren 3, 4 können beim Meßvorgang gegenüber der Ware 2 feststehen oder - je nach Anforderung - parallel zu dieser geführt werden.

Selbstverständlich ist es besonders zweckmäßig, wenn die Zentraleinheit 5 und der Speicher 6 in der Maschinensteuereinheit 7 integriert sind, da dann die Bedienelemente der Maschinensteuereinheit 7 auch zur Steuerung der Zentraleinheit 5 mitverwendet werden können, Außerdem vermindert sich der Bauaufwand.

Figur 2 zeigt schematisch einen Teil einer anderen Ausführungsform der Erfindung. Die Änderung gegenüber der ersten Ausführungsform bezieht sich lediglich auf die Auswahl des Sensors, so daß auf die Darstellung der selbstverständlich ebenfalls notwendigen Bauelemente, wie der Zentraleinheit 5, dem Speicher 6 und der Maschinensteuereinheit 7 aus Gründen der Vereinfachung verzichtet wurde.

Wie Figur 2 zeigt, wird bei der anderen Ausführungsform der Erfindung statt der Sensoren 3, 4 ein an einer Oberplatte 8 befestigter Sensor 9 bei Einfahren der Oberplatte 8 über die Unterplatte 1 und die darauf aufliegende Ware 2 parallel zur Ware 2 geführt. Der Sensor 9 besteht aus einem Laser zum Abtasten des Oberflächenprofils der Ware 2 und aus einem daneben angeordneten Lichtempfänger zum Empfangen des vom Laser abgegebenen und von der Ware 2 reflektierten Lichts 10. In Figur 2 wird der Sensor 9 aus Darstellungsgründen als Einheit dargestellt, die Bauteile können aber auch getrennt angeordnet werden. Der Sensor 9 ist wie die Sensoren 3, 4 mit der Zentraleinheit 5 verbunden.

Das von dem Sensor 9 ermittelte Oberflächenprofil ist für jede Ware so eigenartig, daß mit Hilfe des Meßcodes, der anhand von durch Kennwerte des Profils (Rauhtiefe, Stoffdicke, Maschenabstand, Gewebedichte) bestimmten Parametern festgelegt wird, im Speicher 6 das geeignete Arbeitsprogramm durch die Zentraleinheit 5 gefunden werden kann.

Sollte sich aus technischen Gründen die parallele Führung des Lasers über die Ware nicht ermöglichen lassen, ist selbstverständlich auch ein aufwendigerer Abtastmechanismus mittels eines Scanners möglich.

Der Laser beziehungseise der Sensor 9 ermöglicht es, ein exaktes, bis in den µm-Bereich genaues Strukturprofil zu zeichnen, mit dessen Hilfe gleiche Waren wiederzuerkennen sind. Zu den im Speicher 6 gespeicherten Codes können zusätzlich auch Fehlerschranken oder Codebereiche abgespeichert werden, die ein gewisses Spektrum an Meßergebnissen zulassen, so daß die bei Stoffen vorliegende natürliche Streuung bezüglich der Gewebeabmessungen und der Farben toleriert wird.

Bei den beschriebenen Ausführungsformen wurden ein beziehungsweise zwei Sensoren verwendet. Selbstverständlich ist es auch möglich, bei entsprechenden Anforderungen mehr als zwei Sensoren einzusetzen, um die Meßgenauigkeit zu erhöhen.

Wie bereits ausgeführt, eignet sich das Programmauswahlsystem nicht nur für Bügelmaschinen, sondern auch für viele andere Arten von Textilmaschinen oder Maschinen in der verarbeitenden Industrie allgemein, so auch in der Baustoffindustrie.

## Patentansprüche

1. Programmauswahlsystem für Bearbeitungsmaschinen, mit
- einer Zentraleinheit (5);
- mindestens einem mit der Zentraleinheit (5) verbundenen Sensor (3, 4; 9), der mindestens eine Oberflächeneigenschaft einer zu bearbeitenden Ware (2) erfaßt und in einen Meßwert umsetzt, wobei der Meßwert der Zentraleinheit (5) zugeführt und dort in einen Meßcode umgesetzt wird;
- einem mit der Zentraleinheit (5) verbundenen Speicher (6) mit gespeicherten Codes und zugehörigen Arbeitsprogrammen für bekannte Waren; und mit
- einer mit der Zentraleinheit (5) verbundenen Maschinensteuereinheit (7) für die Bearbeitungsmaschine;
- wobei die Zentraleinheit (5) den Meßcode mit den gespeicherten Codes vergleicht und das zu dem gespeicherten Code mit der geringsten Abweichung gehörende Arbeitsprogramm aus dem Speicher (6) ausliest und der Maschinensteuereinheit (7) zuführt.

2. Programmauswahlsystem nach Anspruch 1, **dadurch gekennzeichnet**, daß der Sensor (9) einen Laser zum Abtasten des Oberflächenprofils der Ware (2) und einen Lichtempfänger zum Empfangen des von der Ware reflektierten Lichts aufweist.

3. Programmauswahlsystem nach Anspruch 1, **dadurch gekennzeichnet**, daß der Sensor ein Ultraschallsensor (3) mit einem Ultraschallsender und einem Ultraschallempfänger ist.

4. Programmauswahlsystem nach Anspruch 1, **dadurch gekennzeichnet**, daß der Sensor ein Infrarotsensor (4) mit einem Infrarotsender und einem Infrarotempfänger ist.

5. Programmauswahlsystem nach Anspruch 1, **dadurch gekennzeichnet**, daß der Sensor ein Farbsensor mit einer Lichtquelle und einem Farblichtempfänger ist.

6. Programmauswahlsystem nach mehreren der Ansprüche 2 bis 5, **dadurch gekennzeichnet**, daß mindestens zwei Sensoren mit unterschiedlichen Wirkprinzipien vorgesehen sind.

7. Programmauswahlsystem nach Anspruch 6, **dadurch gekennzeichnet**, daß ein Ultraschallsensor (3) und ein Infrarotsensor (4) vorgesehen sind.

8. Programmauswahlsystem nach Anspruch 6 oder 7, **dadurch gekennzeichnet**, daß jeder Sensor eine eigene Oberflächeneigenschaft der Ware (2) erfaßt und daraus jeweils in der Zentraleinheit (5) ein eigener Code gebildet wird.

9. Programmauswahlsystem nach einem der vorstehenden Ansprüche, **dadurch gekennzeichnet**, daß der Sensor (3, 4; 9) parallel über die Ware (2) geführt wird.

10. Programmauswahlsystem nach einem der vorstehenden Ansprüchen, **dadurch gekennzeichnet**, daß der Meßabstand des Sensors (3, 4; 9) zur Ware (2) mittels einer Abstandsregelung konstant einstellbar ist.

11. Programmauswahlsystem nach einem der vorstehenden Ansprüche, **dadurch gekennzeichnet**, daß die Daten des Speichers (6) ausladbar sind.

12. Programmauswahlsystem nach einem der vorstehenden Ansprüche, **dadurch gekennzeichnet**, daß die Zentraleinheit (5) und der Speicher (6) in der Maschinensteuereinheit (7) integriert sind.

13. Programmauswahlsystem nach einem der vorstehenden Ansprüche, **dadurch gekennzeichnet**, daß die Bearbeitungsmaschine eine Bügelmaschine ist.

14. Verfahren für ein Programmauswahlsystem nach Anspruch 1, mit den Schritten:
- Erfassen mindestens einer Oberflächeneigenschaft einer zu bearbeitenden Ware (2) durch einen Sensor (3, 4; 9) und Ausgeben eines Meßwerts;
- Zuführen des Meßwerts zu einer Zentraleinheit (5);
- Umsetzen des Meßwerts in einen Meßcode;
- Vergleichen des Meßcodes mit in einem Speicher (6) gespeicherten Codes;
- Auswählen eines zum Meßcode den geringsten Unterschied aufweisenden gespeicherten Codes und eines mit diesem gekoppelten Arbeitsprogramms; und
- Zuführen des Arbeitsprogramms zu einer Maschinensteuereinheit (7) einer Bearbeitungsmaschine.

15. Verfahren nach Anspruch 14, **dadurch gekennzeichnet**, daß das Erfassen der Oberflächeneigenschaft berührungslos erfolgt.
